# EUROPÄISCHE PATENTANMELDUNG

(11) **EP 2 703 791 A1**
(43) Veröffentlichungstag der Anmeldung: **05.03.2014**
(21) Anmeldenummer: 13179883.7
(22) Anmeldetag: 09.08.2013
(51) Int. Cl.: G01J 3/28, G01N 21/39, G01N 21/35, G01J 3/42, G01N 21/27, G01L 11/02, G01J 3/433

(54) **Verfahren zur Laserspektroskopie von Gasen**

(30) Priorität: 03.09.2012 DE 102012215594
(71) Anmelder: SICK AG, 79183 Waldkirch/Breisgau (DE)
(72) Erfinder: Beyer, Dr. Thomas, 79111 Freiburg i. Brsg. (DE); Edler, Dr. Julian, 79312 Emmendingen (DE)
(74) Vertreter: Manitz, Finsterwald & Partner GbR

(57) **Zusammenfassung**

Ein Verfahren zur Bestimmung einer Konzentration eines Gases in einer Probe und/oder der Zusammensetzung eines Gases mittels eines Spektrometers umfasst das Messen eines Absorptionssignals des Gases als Funktion der Wellenlänge, wobei die Wellenlänge einen Wellenlängenbereich im Wesentlichen kontinuierlich durchläuft und das kontinuierliche Durchlaufen des Wellenlängenbereichs durch eine vorzugsweise harmonische Wellenlängenmodulation überlagert wird, wobei der Einfluss der Wellenlängenmodulation auf das Absorptionssignal über die Lichtquellenmodulationseigenschaften und die Nachweiseigenschaften des Spektrometers von den Geräteeigenschaften des jeweiligen Spektrometers abhängig ist, das Umwandeln des Absorptionssignals zumindest in ein erstes Derivativsignal, das Ableiten einer Gaskonzentrationsmessgröße aus dem ersten Derivativsignal, das Bestimmen der Konzentration und/oder Zusammensetzung des Gases aus zumindest der Gaskonzentrationsmessgröße und einer Kalibrationsfunktion, durch welche Einflüsse von Zustandsgrößen des Gases und der Geräteeigenschaften des jeweiligen Spektrometers kompensiert werden.

Erfindungsgemäß umfasst die Kalibrationsfunktion eine Mutterkalibrationsfunktion und eine Gerätekalibrationsfunktion, wobei in die Mutterkalibrationsfunktion die Zustandsgrößen des Gases und eine oder mehrere von jeweiligen Derivativsignalen abgeleitete Gaskonzentrationsmessgrößen eingehen, die so gewählt sind, dass die Lichtquellenmodulationseigenschaften des Spektrometers im Wesentlichen kompensiert werden, und wobei die Gerätekalibrationsfunktion die Nachweiseigenschaften des jeweiligen Spektrometers berücksichtigt.

## Beschreibung

Die Erfindung betrifft ein Verfahren zur Bestimmung einer Konzentration eines Gases in einer Probe und/oder der Zusammensetzung eines Gases, mittels eines Spektrometers. Das Verfahren umfasst das Messen eines Absorptionssignals, das Umwandeln des Absorptionssignals in ein Derivativsignal, das Ableiten einer Gaskonzentrationsmessgröße aus dem Derivativsignal sowie das Bestimmen der Konzentration und/oder Zusammensetzung des Gases aus der Gaskonzentrationsmessgröße und einer Kalibrationsfunktion. Die Erfindung betrifft außerdem ein Spektrometer zur Ausführung eines derartigen Verfahrens.

Zur Untersuchung einer Gasprobe auf ihre Zusammensetzung und insbesondere auf die Konzentration eines bestimmten Gases der Probe hin ist es bekannt, diese Informationen mittels Spektroskopie anhand der spezifischen Absorption elektromagnetischer Wellen wie etwa Licht durch verschiedene Gase bzw. Gasgemische abzuleiten. Typischerweise werden hierzu Laserspektrometer verwendet, bei denen das Licht eines Lasers durch die Probe gestrahlt wird, die sich beispielsweise in einem Messraum befindet oder durch einen Messraum hindurchgeleitet wird. Bei bekannter Ausdehnung der Probe in Laserausbreitungsrichtung (Ausdehnung des Messraums) kann gemäß dem Lambert-Beerschen Gesetz der von der Wellenlänge des eingestrahlten Laserlichts abhängige Absorptionskoeffizient bestimmt werden. Aus dem Vergleich eines so gewonnenen Absorptionsspektrums mit für verschiedene Gase bekannten Spektren kann auf die Konzentration eines Gases bzw. dessen Anteil an der Probe geschlossen werden.

Verschiedene Gase weisen verschiedene typische Wellenlängen auf, bei denen sie besonders stark absorbieren. Die entsprechenden Maxima im Absorptionsspektrum bzw. Minima im Transmissionsspektrum sind idealerweise scharfe Absorptionslinien. Aufgrund der Unschärferelation, des Drucks des Gases sowie des temperaturabhängigen Dopplereffekts sind reale Absorptionslinien jedoch verbreitert zu einer bestimmten Absorptionslinienform. Diese weist in der Regel im Wesentlichen ein Voigt-Profil auf, das sich bei Faltung einer Gauß-Kurve, die typisch für eine temperaturabhängige Dopplerverbreiterung ist, mit einer Lorentz-Kurve ergibt, deren Breite typischerweise druckabhängig ist.

Für die Messung einer oder mehrerer solcher Absorptionslinien in einem Absorptionsspektrum wird daher ein ganzer Wellenlängenbereich untersucht, indem beispielsweise der Laser des Spektrometers eine lineare Wellenlängenrampe durchläuft. Dabei kann die lineare Rampe auch Teil einer Sägezahn- oder Dreiecksfunktion sein, um denselben Wellenlängenbereich mehrmals zu durchlaufen.

Eine Erweiterung dieser direkten Spektroskopie stellt die Wellenlängen-Modulations-Spektroskopie dar, bei der das geschilderte, im Wesentlichen kontinuierliche Durchlaufen des Wellenlängenbereichs von einer demgegenüber schnellen Modulation der Wellenlänge überlagert wird. Typischerweise ist diese Wellenlängenmodulation sinusförmig mit einer fest vorgegebenen Modulationsfrequenz. Da das Absorptionsspektrum wie eine Übertragungsfunktion wirkt, wird die Wellenlängenmodulation des Laserlichts aufgrund der Absorption durch die Probe in ein entsprechend moduliertes Absorptionssignal umgewandelt, das vom Spektrometer aufgezeichnet wird.

Zur Auswertung werden aus dem modulierten Absorptionssignal die Anteile bei der Modulationsfrequenz und bei ganzzahligen Vielfachen der Modulationsfrequenz bestimmt. Dies kann beispielsweise mit phasensensitiven Verstärkern, typischerweise Lock-In-Verstärkern, erfolgen oder durch eine rechnerische Verarbeitung etwa mittels einer Fourier-Zerlegung. Die so bestimmten Signale, die für jede Wellenlänge den Anteil des modulierten Absorptionssignals bei der Modulationsfrequenz oder bei einem Vielfachen der Modulationsfrequenz angeben, werden auch Derivativsignale genannt, da sie im Wesentlichen, d.h. insbesondere für den Grenzfall kleiner Modulationsamplituden, den (mathematischen) Ableitungen des Absorptionsspektrums entsprechen. Der Anteil bei der Modulationsfrequenz selbst entspricht dabei der ersten Ableitung und wird auch 1f-Signal genannt, der Anteil bei der zweifachen Modulationsfrequenz wird 2f-Signal genannt und entspricht der zweiten Ableitung usw.

Aufgrund dieses Zusammenhangs enthalten die Derivativsignale im Wesentlichen dieselbe Information, die auch im direkten Absorptionssignal enthalten ist, so dass die Gaskonzentration bzw. die Probenzusammensetzung auch aus einem jeweiligen Derivativsignal bestimmt werden kann. Der Vorteil der Verwendung der Derivativsignale besteht dabei darin, dass die zu bestimmende Information in höhere Frequenzbereiche verschoben wird, in denen das Signal-zu-Rausch-Verhältnis in der Regel besser ist als in niedrigen Frequenzbereichen. Außerdem können durch die Derivativsignale Hintergrundsignale, die als abzuziehende Grundlinien das Absorptionsspektrum verfälschen, zum Teil eliminiert werden. Im 1f-Signal ist beispielsweise der Einfluss eines konstanten Offsets beseitigt, im 2f-Signal der Einfluss beliebiger linearer Grundlinien, usw. Je höher der Grad des Derivativsignals, desto komplexere Grundlinien werden aus dem Signal herausgefiltert, desto geringer wird aber auch die Signalintensität. Aus diesem Grund wird typischerweise das 2f-Signal als guter Kompromiss zwischen den Vor- und Nachteilen höherer Ableitungen zur Auswertung herangezogen.

Ein Verfahren zur Gasanalyse mit Laser-Spektroskopie nach dem Prinzip der Wellenlängen-Modulations-Spektroskopie ist in der EP 1 873 513 A2 beschrieben. Darin ist insbesondere dargestellt, wie im Zuge der Signalauswertung aus dem 2f-Signal eines Absorptionsspektrums Rückschlüsse auf Größen wie etwa die Konzentration eines Gases gezogen werden können. Ferner wird die Veränderlichkeit von Randbedingungen durch im Zuge einer Kalibrierung bestimmte Faktoren wie etwa einen Kalibrierfakor berücksichtigt.

Problematisch bei der Anwendung der Wellenlängen-Modulations-Spektroskopie ist, dass die Wellenlänge des Lasers in der Regel durch eine an den Laser angelegte Stromintensität eingestellt wird. Die Modulation der Wellenlänge ist demnach eine Folge einer entsprechenden Strommodulation. Die Abhängigkeit der Wellenlänge von der genannten Stromintensität ist dabei aber nur theoretisch konstant. In der Praxis besteht ein komplexer und von Laser zu Laser unterschiedlicher Zusammenhang. Über diesen Zusammenhang, der im Folgenden als Lichtquellenmodulationseigenschaften des Spektrometers bezeichnet werden soll, hängt der Einfluss der Wellenlängenmodulation auf das Absorptionssignal von Geräteeigenschaften wie beispielsweise Eigenschaften des Lasers ab.

Die Wellenlängenmodulation wird mit einem Detektor nachgewiesen. In der Praxis besteht ein komplexer und von Spektrometer zu Spektrometer unterschiedlicher Zusammenhang zwischen der tatsächlichen Laserwellenlängenmodulation und der gemessenen Laserwellenlängenmodulation. Dieser Zusammenhang hängt von den Eigenschaften des Spektrometers und der Elektronik des verwendeten Spektrometers ab und soll im Folgenden als Nachweiseigenschaften des Spektrometers bezeichnet werden. Die Geräteeigenschaften können also in Lichtquellenmodulationseigenschaften und Nachweiseigenschaften unterteilt werden. Die Lichtquellenmodulationseigenschaften und/oder die Nachweiseigenschaften des Spektrometers verändern sich außerdem mit der Zeit und müssen daher für jedes Spektrometer regelmäßig neu kalibriert werden. Der Zeitraum zwischen zwei Kalibrationen ist dabei typischerweise kürzer als ein Jahr.

Die Kalibration erfolgt durch das Bestimmen einer Kalibrationsfunktion, die dazu dient, verschiedene Größen, die das Bestimmen der eigentlichen Gaskonzentration aus dem Messsignal verfälschend beeinflussen, zu berücksichtigen und die eigentliche Messgröße von diesen Einflüssen zu befreien. In die Kalibrationsfunktion gehen daher alle diese Einflussgrö-ßen ein. Konkret muss die Kalibrationsfunktion eines Spektrometers für die Wellenlängen-Modulations-Spektroskopie Zustandsgrößen der Probe, wie etwa deren Temperatur, deren Druck und Einflüsse von Fremdgasen auf die Messung berücksichtigen. Außerdem muss sie die Geräteeigenschaften des Spektrometers, insbesondere über die Lichtquellenmodulationseigenschaften und die Nachweiseigenschaften des Spektrometers, berücksichtigen. Auf diese Weise können die Einflüsse dieser Größen auf die Messgröße eliminiert werden, so dass die Messgröße letztlich die von der Teilchenzahl des untersuchten Gases abhängige Gaskonzentration oder Gaszusammensetzung unverfälscht angeben kann.

Um eine derartige Kalibrationsfunktion zu bestimmen (Kalibration), muss deren Abhängigkeit von den das Messergebnis verfälschenden Größen ermittelt werden. Die Durchführung der Kalibration umfasst daher in der Regel das Messen von Absorptions- und Derivativsignalen an einer Vielzahl von Testküvetten mit Referenzproben, deren Konzentration bzw. Zusammensetzung ebenso genau bekannt sein muss wie die jeweils aktuellen Zustandsgrößen der Probe sowie die Stromintensität und Wellenlänge des Spektrometers. Diese Messungen müssen bei zahlreichen Kombinationen dieser Größen, etwa bei präzise eingestellten Drücken und Temperaturen der jeweiligen Probe, durch die der gesamte Arbeitsbereich des Spektrometers abgedeckt wird, durchgeführt werden. Aufgrund des damit verbundenen Aufwands ist das regelmäßige Kalibrieren, insbesondere bei Durchführung durch einen ungeübten Anwender, fehleranfällig und zeit-aufwendig oder verursacht regelmäßige Kosten, wenn ein Dienstleister mit der Durchführung beauftragt wird.

Es ist daher eine Aufgabe der Erfindung, ein Verfahren zur Bestimmung einer Konzentration eines Gases in einer Probe und/oder der Zusammensetzung eines Gases in einer Probe mittels eines Spektrometers zu schaffen, das einfacher, weniger fehleranfällig und weniger zeitaufwendig ist.

Diese Aufgabe wird durch ein Verfahren mit den Merkmalen des Anspruchs 1 gelöst und insbesondere dadurch, dass die Kalibrationsfunktion eine Mutterkalibrationsfunktion und eine Gerätekalibrationsfunktion umfasst, wobei in die Mutterkalibrationsfunktion die Zustandsgrößen des Gases und eine oder mehrere von jeweiligen Derivativsignalen abgeleitete Gaskonzentrationsmessgrößen eingehen, die so gewählt sind, dass die Lichtquellenmodulationseigenschaften des Spektrometers im Wesentlichen kompensiert werden, und wobei die Gerätekalibrationsfunktion die Nachweiseigenschaften des jeweiligen Spektrometers berücksichtigt. Die Aufgabe wird entsprechend gelöst durch ein Spektrometer zur Ausführung des erfindungsgemäßen Verfahrens. Bevorzugte Ausgestaltungen sind Gegenstand von Unteransprüchen.

Unter Gaskonzentrationsmessgrößen sind dabei Werte zu verstehen, die aus jeweiligen Derivativsignalen abgeleitet werden können, beispielsweise indem sie eine Fläche oder ein ähnliches an den Derivativsignalen be-stimmbares Maß angeben, und die als Messgrößen Information über die zu messende Gaskonzentration und/oder die zu messende Zusammensetzung des Gases enthalten. Erfindungsgemäß können in die Mutterkalibration auch mehrere Gaskonzentrationsmessgrößen eingehen, die auf dieselbe oder auf verschiedene Weise aus demselben oder auch aus verschiedenen Derivativsignalen abgeleitet sein können.

In die Mutterkalibrationsfunktion können die Zustandsgrößen des Gases gesondert von den Gaskonzentrationsmessgrößen explizit eingehen. Alter-nativ kann es aber auch vorgesehen sein, dass einige oder alle Zustandsgrößen des Gases nicht explizit in die Mutterkalibrationsfunktion eingehen, sondern nur indem sie in den in die Mutterkalibrationsfunktion eingehenden Gaskonzentrationsmessgrößen enthalten sind.

Das erfindungsgemäße Verfahren zeichnet sich dadurch aus, dass die Kalibrationsfunktion zur Bestimmung der Konzentration und/oder Zusammensetzung des Gases aus von jeweiligen Derivativsignalen abgeleiteten Gaskonzentrationsmessgrößen, die zu dem Zweck vorgesehen ist, verfälschende Einflüsse zu kompensieren, nicht aus einer einzelnen Kalibrationsfunktion besteht, sondern zwei verschiedene, voneinander unabhängige Teilkalibrationsfunktionen umfasst, nämlich eine Mutterkalibrationsfunktion und eine Gerätekalibrationsfunktion. Diese zwei Funktionen unterscheiden sich erfindungsgemäß ganz wesentlich insofern, als in die Mutterkalibrationsfunktion die Zustandsgrößen des Gases und die Gaskonzentrationsmessgrößen eingehen, also solche Größen, die bei der Messung aktuelle physikalische Zustände des Gases beschreiben oder zumindest aus diesen abgeleitet sind, während durch die Gerätekalibrationsfunktion nur die Nachweiseigenschaften des jeweiligen Spektrometers berücksichtigt werden, die insbesondere von Spektrometer zu Spektrometer verschieden sein können und sich für dasselbe Spektrometer über gewisse Zeiträume, etwa in der Größenordnung von mehreren Monaten, hinweg verändern können.

Die beiden genannten Teilkalibrationsfunktionen sind insbesondere insofern voneinander getrennt, als sie die bei der jeweils anderen Teilkalibrationsfunktion berücksichtigten Größen selber nicht berücksichtigen. Dies ist dadurch möglich, dass die in die Mutterkalibrationsfunktion eingehenden Größen gerade so gewählt sind, dass die Lichtquellenmodulationseigenschaften des Spektrometers im Wesentlichen kompensiert werden. Auf diese Weise ist die Mutterkalibrationsfunktion sozusagen entkoppelt von den Geräteeigenschaften, da einerseits die Lichtquellenmodulationseigenschaften kompensiert werden und andererseits die Nachweiseigenschaften des Spektrometers unabhängig davon in der Gerätekalibrationsfunktion berücksichtigt werden.

Die Gaskonzentrationsmessgrößen, die aus jeweiligen Derivativsignalen abgeleitet werden, sind dabei die Konzentration des Gases widerspiegelnde Messgrößen, die durch die zweigeteilte Kalibrationsfunktion noch von verfälschenden Einflüssen zu befreien sind, um die Konzentration oder Zusammensetzung des Gases möglichst exakt widerzuspiegeln.

Die Bestimmung der Gaskonzentration kann dabei die Bestimmung der Gaskonzentration in einer Probe bedeuten, was auch die Bestimmung der Konzentration einer Gaskomponente in einem Gas beziehungsweise die Bestimmung der Zusammensetzung eines Gases begrifflich einschließen soll.

Bei Anwendung der beiden Teilkalibrationsfunktionen kann durch die Verwendung einer Mutterkalibrationsfunktion und einer Gerätekalibrationsfunktion genauso zuverlässig der Einfluss aller relevanten Größen auf das Messergebnis kompensiert werden, wie es auch durch eine einzelne Kalibrationsfunktion erfolgen würde. Im Unterschied aber zu der Verwendung einer einzelnen Kalibrationsfunktion wird durch die Aufteilung auf eine Mutterkalibrationsfunktion und eine Gerätekalibrationsfunktion die Kalibration des Spektrometers erheblich vereinfacht. Einerseits braucht die Bestimmung der Mutterkalibrationsfunktion lediglich einmal für jedes Spektrometer, und insbesondere lediglich einmal für eine Vielzahl gleichartiger, z.B. baugleicher Spektrometer durchgeführt zu werden, da sie feste physikalische Zusammenhänge beschreibt. Andererseits muss die Bestimmung der Gerätekalibrationsfunktion, die variabel ist, zwar weiterhin regelmäßig erfolgen, ist aber auf wenige Eigenschaften des Spektrometers beschränkt und daher wesentlich einfacher und schneller durchzuführen.

Die Mutterkalibrationsfunktion kann beispielsweise bereits durch den Hersteller bestimmt werden. Dadurch wird insbesondere ein Anwender des Spektrometers von diesem in die Mutterkalibrationsfunktion einfließenden Teil der Durchführung der Kalibration entlastet, der mit großem Aufwand verbunden ist, da er z.B. erfordern kann, zahlreiche Referenzproben in Testküvetten bei einer Vielzahl präzise einzustellender Drücke und Temperaturen über den gesamten Anwendungsbereich des Spektrometers zu messen. Das als regelmäßige Kalibration für den Anwender verbleibende Bestimmen der Gerätekalibrationsfunktion ist im Vergleich dazu wesentlich einfacher und lässt sich daher weniger fehleranfällig ausführen, so dass es auch von einem ungeübten Anwender schnell und korrekt durchgeführt werden kann.

Die Mutterkalibrationsfunktion und/oder die Gerätekalibrationsfunktion können etwa auf die eine oder mehreren Gaskonzentrationsmessgrößen angewandt werden und direkt eine von den Einflüssen der Zustandsgrößen der Probe und der Geräteeigenschaften des Spektrometers freie Konzentration oder Zusammensetzung des Gases ausgeben. Alternativ können sie dazu dienen, sowohl überhaupt erst die eine oder mehreren Gaskonzentrationsmessgrößen aus dem Derivativsignal abzuleiten und diese zugleich von verfälschenden Einflüssen zu befreien. In einer bevorzugten Ausführungsform liefern die Mutterkalibrationsfunktion und/oder die Gerätekalibrationsfunktion einen (jeweiligen) Korrekturwert, wobei die verfälschenden Einflüsse durch Multiplikation der einen oder mehreren Gaskonzentrationsmessgrößen mit dem Korrekturwert eliminiert werden. Die Gerätekalibrationsfunktion kann z.B. auch Parameter liefern, welche dann in der Mutterkalibrationsfunktion verwendet werden, um die verfälschenden Einflüsse auf den Messwert zu eliminieren.

Es ist bevorzugt, wenn das zumindest eine Derivativsignal, das durch Umwandeln des gemessenen Absorptionssignals ermittelt wird, auf eine der Lichtintensität proportionale Größe normiert wird. Dadurch wird das Messsystem unabhängig von Verschmutzungen der verwendeten Optiken und Staub im Strahlengang.

Vorzugsweise umfassen die Zustandsgrößen des Gases, welche in die Mutterkalibrationsfunktion eingehen, einen Druck, eine Temperatur und/oder einen Fremdgaseinfluss, d.h. den Einfluss weiterer Gase in der Probe auf das Absorptionsspektrum und somit auf ein Absorptions- oder Derivativsignal der Probe. Die Zustandsgrößen können aber auch weitere und im Wesentlichen alle solchen Größen umfassen, die physikalische Zustände des Gases beschreiben. Daneben können zusätzliche Messgrößen in die Mutterkalibrationsfunktion eingehen, welche direkt aus den gemessenen Signalen generiert werden. Insbesondere muss der Fremdgaseinfluss nicht notwendigerweise als Zustandsgröße vorliegen.

Weiterhin ist es vorteilhaft, wenn die von der Gerätekalibrationsfunktion berücksichtigten Nachweiseigenschaften des jeweiligen Spektrometers Eigenschaften einer Elektronik des Spektrometers sind. Insbesondere können die Nachweiseigenschaften des jeweiligen Spektrometers aber auch alle sonstigen gerätespezifischen und solchen Eigenschaften umfassen, die einen Einfluss auf den Zusammenhang zwischen der tatsächlichen und der gemessenen Laserwellenlängenmodulation haben. Somit fließen vorteilhafterweise Informationen über die Nachweiseigenschaften des Spektrometers lediglich in die Gerätekalibrationsfunktion, nicht aber in die Mutterkalibrationsfunktion ein.

In einer bevorzugten Weiterbildung des erfindungsgemäßen Verfahrens wird die Gerätekalibrationsfunktion durch eine Zwei-Punkt-Kalibration bestimmt. Eine Zwei-Punkt-Kalibration ist im Wesentlichen darauf beschränkt, dass zwei Messungen durchgeführt werden, wobei sich die Messungen durch zwei verschiedene (Referenz-)Proben und/oder in einer oder mehreren Zustandsgrößen der Probe(n) unterscheiden. Die so unterschiedenen zwei "Punkte" der Zwei-Punkt-Messung können frei wählbar oder vorgegeben sein. Die "Punkte" können beispielsweise durch zwei Testküvetten mit zwei Referenzgasen oder Referenzgaszusammensetzungen und/oder durch zwei definierte Drücke und/oder Temperaturen derselben oder unterschiedlicher Proben definiert sein. Die Durchführung der Gerätekalibration ist dann aufgrund dieser lediglich zwei Messungen besonders einfach, zuverlässig und schnell durchführbar.

Ferner ist es besonders bevorzugt, wenn die Zwei-Punkt-Kalibration eine Messung des Gases oder eines Referenzgases bei einer ersten und bei einer zweiten Gaskonzentration umfasst. Vorzugsweise entspricht die genannte erste Gaskonzentration einer Gaskonzentration von 0 % und die genannte zweite Gaskonzentration einer Gaskonzentration von 70 % einer maximalen zuverlässig messbaren Konzentration dieses Gases. Die maximal zuverlässig messbare Konzentration des Gases ist dabei durch den Anwendungsbereich hinsichtlich der Gaskonzentration definiert, auf den das Spektrometer ausgelegt ist. Testküvetten, die Proben des Gases oder eines Referenzgases bei der genannten ersten bzw. zweiten Gaskonzentration enthalten, können beispielsweise vom Hersteller des Spektrometers zur einfachen Durchführung der regelmäßigen Bestimmung der Gerätekalibrationsfunktion durch den Anwender dem Spektrometer beigefügt sein.

Bei der Durchführung einer Messung mit dem Spektrometer an einer Probe gehen in die Mutterkalibrationsfunktion neben den Zustandsgrößen der Probe die Messsignale, also insbesondere aus der Absorptionsmessung der Probe abgeleitete Derivativsignale in Form von Gaskonzentrationsmessgrößen ein. Damit die Mutterkalibrationsfunktion daraus einen die Lichtquellenmodulationseigenschaften des Spektrometers kompensierenden Beitrag zur von verfälschenden Einflüssen freien Bestimmung der Konzentration und/oder Zusammensetzung des Gases liefern kann, müssen solche Gaskonzentrationsmessgrößen in die Mutterkalibrationsfunktion eingehen, durch die der spezifische Einfluss der Lichtquellenmodulationseigenschaften auf die Form des Messsignals herausgerechnet werden kann.

Bei einer konstanten Absorptionslinienform, bei der nur die Höhe der Absorptionslinie abhängig von den Lichtquellenmodulationseigenschaften des Spektrometers variieren kann, könnte z. B. aus zumindest zwei Derivativsignalen eine jeweilige Messgröße bestimmt werden, um daraus eine für die zu bestimmende Konzentration und/oder Zusammensetzung charakteristische Messgröße zu erhalten, bei der die Lichtquellenmodulationseigenschaften des Spektrometers kompensiert sind. Denn je nach Wellenlängenmodulation treten dafür charakteristische Kombinationen der Derivativsignalgrößen auf. Da allerdings die Absorptionslinienform bei verschiedenen Umgebungsbedingungen, wie etwa Temperatur und Druck oder sich ändernden Mischungen mit Fremdgasen, nicht konstant ist, sondern sich insbesondere bezüglich ihrer Breite verformt, bedarf es einer weiteren Messgröße, um auf eindeutige Weise die Wellenlängenmodulation des Spektrometers aus dem Messsignal herausrechnen zu können.

Als Messgrößen, die neben den oben genannten Zustandsgrößen der Probe in die Mutterkalibrationsfunktion eingehen, kommen insbesondere solche Messgrößen in Frage, die ein Maß für das Derivativsignal und ein Maß für das Verhältnis zweier Derivativsignale sowie ein Maß für die Verbreiterung der Absorptionslinien sind. Solche Gaskonzentrationsmessgrößen sind dann dazu geeignet, die Lichtquellenmodulationseigenschaften des Spektrometers zu kompensieren. Im Folgenden werden anhand vorteilhafter Ausführungsformen derart geeignete Gaskonzentrationsmessgrößen beschrieben.

Bei einer bevorzugten Ausführungsform geht als Gaskonzentrationsmessgröße in die Mutterkalibrationsfunktion zumindest eine Fläche des ersten Derivativsignals oder eine zu der Fläche des ersten Derivativsignals proportionale Größe ein. Weiterhin ist es bevorzugt, wenn das Absorptionssignal nicht nur in ein erstes Derivativsignal, sondern auch in ein von dem ersten Derivativsignal verschiedenes zweites Derivativsignal umgewandelt wird und als Gaskonzentrationsmessgröße in die Mutterkalibrationsfunktion zumindest ein Verhältnis einer Fläche des ersten Derivativsignals und einer Fläche des zweiten Derivativsignals eingeht. Die Fläche eines Signales kann dabei zum Beispiel die Fläche eines Peaks des Signals sein.

Der Ausdruck "erstes Derivativsignal" ist dabei nicht auf das Derivativsignal, das der ersten Ableitung des Absorptionssignals entspricht (1f-Signal) eingeschränkt, sondern kann irgendeines der Derivativsignale (1f, 2f, usw.) bezeichnen. Gleiches gilt für den Ausdruck "zweites Derivativsignal", der nicht als auf das 2f-Signal eingeschränkt zu verstehen ist.

Vorzugsweise wird die Fläche des ersten Derivativsignals aus dem Abstand eines Maximums dieses Derivativsignals zu einem Minimum dieses Derivativsignals oder aus zwischen der x-Achse und dem jeweiligen Derivativsignal eingeschlossenen Flächen abgeleitet. Gleiches gilt gegebenenfalls für die Fläche des zweiten Derivativsignals. Wenn es sich bei dem Derivativsignal, dessen Fläche zu bestimmen ist, um ein Derivativsignal handelt, das in etwa einer geradzahligen Ableitung des Absorptionssignals entspricht (2f, 4f, usw.), so weist dieses Signal in der Regel ein dominierendes Maximum bei der zentralen Wellenlänge der jeweiligen Absorptionslinie des Gases auf und weist symmetrisch zu beiden Seiten dieses Maximums jeweils ein Minimum auf. Zur Bestimmung der genannten Fläche dieses Derivativsignals kann dann der wertmäßige Abstand des zentralen Maximums von einem der beiden Minima oder von einem Mittelwert der beiden Minima herangezogen werden. Derivativsignale, die in etwa ungeradzahligen Ableitungen des Absorptionssignals entsprechen (1f, 3f, usw.), sind in der Regel punktsymmetrisch zu der zentralen Wellenlänge der jeweiligen Absorptionslinie und weisen einen Nulldurchgang bei der zentralen Wellenlänge, ein dazu benachbartes Maximum auf der einen Seite sowie ein dazu benachbartes Minimum auf der anderen Seite des Nulldurchgangs auf. In diesem Fall kann dann der wertmäßige Abstand dieses Maximums und dieses Minimums für die Bestimmung der genannten Fläche herangezogen werden.

Für den Fall, dass von einer lediglich geringfügigen Verbreiterung der Absorptionslinie aufgrund von Druck, Temperatur oder weiteren Einflüssen ausgegangen werden kann, würden diese Gaskonzentrationsmessgrößen (Fläche und Flächenverhältnis) als in die Mutterkalibrationsfunktion eingehende Größen bereits ausreichen. Für den allgemeineren Fall ist eine weitere aus den Derivativsignalen abgeleitete Gaskonzentrationsmessgröße erforderlich.

Es ist daher ferner vorteilhaft, wenn als Gaskonzentrationsmessgröße in die Mutterkalibrationsfunktion zumindest eine Breite des ersten Derivativsignals eingeht. Diese Abhängigkeit der Mutterkalibrationsfunktion von einer Breite eines Derivativsignals kann die Abhängigkeit von einer Fläche bzw. einem Flächenverhältnis der Derivativsignale ergänzen, so dass letztlich für hinsichtlich ihrer Lage und ihrer Verbreiterung ganz unterschiedliche Absorptionslinienformen die Einflüsse der Zustandsgrößen auf das Messsignal unabhängig von den Lichtquellenmodulationseigenschaften des Spektrometers herausgerechnet werden können.

Vorzugsweise ist die genannte Breite des ersten Derivativsignals eine Halbwertsbreite eines Extremums dieses Derivativsignals oder ein Abstand zwischen zwei Extrema, zwischen zwei Nulldurchgängen oder zwischen einem Extremum und einem Nulldurchgang dieses Derivativsignals. Zur Bestimmung der Breite können also im Wesentlichen alle markanten und eindeutig identifizierbaren Punkte des Derivativsignals herangezogen werden, die es ermöglichen, den Grad zu bestimmen, um den die Absorptionslinie durch verschiedene mögliche Einflüsse verbreitert ist.

Eine Mutterkalibrationsfunktion, die wie dargestellt die Flächen bzw. das Verhältnis der Flächen von zumindest zwei Derivativsignalen sowie die Breite eines der Derivativsignale berücksichtigt, erfasst damit im Wesentlichen alle relevanten Einflüsse von Zustandsgrößen der Probe auf die Absorptionslinienform, darunter insbesondere die temperaturabhängige Dopplerverbreiterung des Gauß-Anteils und die druckabhängige Verbreiterung des Lorentz-Anteils an der Absorptionslinie. Somit ist die Mutterkalibrationsfunktion, nachdem sie einmal aufgestellt worden ist, geeignet, aus den Zustandsgrößen der Probe sowie aus den aus jeweiligen Derivativsignalen abgeleiteten Gaskonzentrationsmessgrößen, insbesondere aus Flächen und Breiten der Derivativsignale, einen den Einfluss der Zustandsgrößen, nicht aber den Einfluss der Nachweiseigenschaften des Spektrometers berücksichtigenden Beitrag zum Eliminieren dieser verfälschenden Einflüsse auf die zu messende Größe zu leisten. Vor allem ist es möglich, mit diesen Zustandsgrößen den Einfluss der Lichtquellenmodulationseigenschaften des Spektrometers auf das Messsignal zu eliminieren, so dass dieser Einfluss nicht mehr in der Gerätekalibrationsfunktion berücksichtigt zu werden braucht, sondern diese auf die Nachweiseigenschaften beschränkt sein kann.

Zur Bestimmung (Kalibration) der Mutterkalibrationsfunktion, was nur einmal für ein jeweiliges Spektrometer, vorteilhafterweise nur einmal für eine Serie gleichartiger Spektrometer zu erfolgen braucht, sieht eine bevorzugte Ausführungsform des erfindungsgemäßen Verfahrens vor, dass die Mutterkalibrationsfunktion durch eine Vielzahl von Messungen bei Vorliegen verschiedener Kombinationen von Zustandsgrößen einer jeweiligen Probe bestimmt wird. Dabei werden durch die verschiedenen Kombinationen von Zustandsgrößen vorteilhafterweise die einzelnen Zustandsgrößen möglichst fein abgestuft über den gesamten Anwendungsbereich des Spektrometers variiert, um die Mutterkalibrationsfunktion möglichst genau bestimmen zu können.

Nachdem für zahlreiche Kombinationen von Zustandsgrößen der Probe Messungen durchgeführt sind, kann die Mutterkalibrationsfunktion, beispielsweise als mehrdimensionales Polynom oder als sonstige mathematische Funktion, an einen so gewonnenen Datensatz angepasst werden. Ebenso ist es möglich, dass die Mutterkalibration keine kontinuierlich definierte Funktion ist, sondern nach Art einer Nachschlagetabelle durch eine Vielzahl von Stützpunkten definiert ist, zwischen denen beispielsweise gerundet oder interpoliert werden kann. Dass eine derart empirisch bestimmte Mutterkalibrationsfunktion geeignet ist, durch geeignete Wahl der in sie eingehenden Gaskonzentrationsmessgrößen die Lichtquellenmodulationseigenschaften des Spektrometers zu kompensieren, kann mathematisch für Absorptionslinien, die im Wesentlichen reine Lorentz-Kurven sind, nachgewiesen werden. Für Absorptionslinien mit einem Voigt-Profil, die eine Mischung von Lorentz- und Gauß-Kurven sind, wie es in der Regel der Fall ist, zeigt sich ebenfalls, dass die so bestimmte Mutterkalibrationsfunktion diese gewünschte Eigenschaft im Wesentlichen aufweist.

Die Erfindung betrifft auch ein Spektrometer, das zur Ausführung des erfindungsgemäßen Verfahrens insbesondere gemäß einer der dargelegten Ausführungsformen geeignet ist. Ein derartiges Spektrometer kann beispielsweise das jeweilige Verfahren weitestgehend automatisiert oder teilautomatisiert ausführen, wobei im letztgenannten Fall ein Anwender, etwa mittels einer Anzeigeeinrichtung des Spektrometers, durch einzelne Schritte des Verfahrens geleitet werden kann. Das Spektrometer kann ferner eine Recheneinheit, beispielsweise einen Mikroprozessor, umfassen, auf der das erfindungsgemäße Verfahren oder Teile desselben als Routinen gespeichert sind. Vorzugsweise kann außerdem eine Routine für die Durchführung der Bestimmung der Gerätekalibrationsfunktion oder die Anleitung eines Anwenders zur Durchführung dieser Bestimmung vorgesehen sein. Bei einer Ausführungsform des Spektrometers ist vorgesehen, dass Zustandsgrößen der zu messenden Probe eines Gases von einem Anwender eingegeben werden. Alternativ umfasst das Spektrometer in einer bevorzugten Ausführungsform Sensoren, um zumindest einige dieser Zustandsgrößen, etwa Temperatur und Druck der Probe, selbst zu bestimmen.

Zur Ausführung des erfindungsgemäßen Verfahrens ist es vorteilhaft, wenn zur wellenlängenabhängigen Messung des Absorptionssignals die Wellenlänge der Lichtquelle des Spektrometers präzise eingestellt und idealerweise kontinuierlich über einen großen Wellenlängenbereich variiert werden kann. Um Licht einer scharfen Wellenlänge zu erhalten, können beispielsweise Filter oder Gitter vor einer herkömmlichen Lichtquelle eingesetzt werden.

In einer besonders bevorzugten Ausführungsform umfasst das Spektrometer einen Laser als Lichtquelle und resultiert das Absorptionssignal aus der Absorption von Licht dieses Lasers durch das Gas. Der Einsatz eines Lasers ermöglicht es, auf einfache Weise Licht hoher Intensität mit einer scharf definierten Wellenlänge zu erhalten. Vorzugsweise ist dieser Laser zudem in seiner Wellenlänge verstellbar. Hierzu eignen sich insbesondere Diodenlaser, etwa nach Art eines Vertical Cavity Diodenlasers oder eines Distributed Feedback Diodenlasers, die bei einem erfindungsgemäßen Spektrometer bevorzugt eingesetzt werden.

Weiterhin ist es bevorzugt, wenn die Mutterkalibrationsfunktion im Wesentlichen dauerhaft in dem Spektrometer gespeichert ist. Dazu kann das Spektrometer beispielsweise eine Speichereinheit umfassen. Die Mutterkalibrationsfunktion kann beispielsweise als Definition einer mathematischen Funktion gespeichert sein oder als eine mehrdimensionale Matrix von Stützpunkten nach Art einer Nachschlagetabelle. Zur Bestimmung von Werten zwischen den Stützpunkten können Rundungen oder Interpolationen vorgesehen sein. Die dauerhafte Speicherung der Mutterkalibrationsfunktion im Spektrometer ermöglicht es, dass die Bestimmung der Mutterkalibrationsfunktion einmalig, etwa beim Hersteller, erfolgt und dann für alle weiteren Verwendungen des Spektrometers in dem Spektrometer selbst abrufbar vorliegt. Da eine Wiederholung des Bestimmens der Mutterkalibrationsfunktion in der Regel nicht vorgesehen ist, kann die Mutterkalibration schreibgeschützt in dem Spektrometer gespeichert sein.

Die Gerätekalibrationsfunktion kann ähnlich wie die Mutterkalibrationsfunktion in dem Spektrometer gespeichert werden. Da die Gerätekalibrationsfunktion aber in der Regel regelmäßig neu bestimmt werden muss, ist sie vorzugsweise nicht dauerhaft gespeichert, sondern überschreibbar.

Im Folgenden wird die Erfindung unter Bezug auf die beiliegenden schematischen Figuren erläutert. Dabei zeigen:
- Fig. 1: in einer schematischen Darstellung, welche Größen während des Ablaufs einer Messung über welche Zusammenhänge in die Kalibrationsfunktion gemäß dem Stand der Technik eingehen, und
- Fig. 2: in einer schematischen Darstellung, welche Größen während des Ablaufs einer Messung über welche Zusammenhänge in die in eine Mutterkalibrationsfunkti-on und eine Gerätekalibrationsfunktion zweigeteilte Kalibrationsfunktion gemäß einer Ausführungsform des erfindungsgemäßen Verfahrens eingehen.

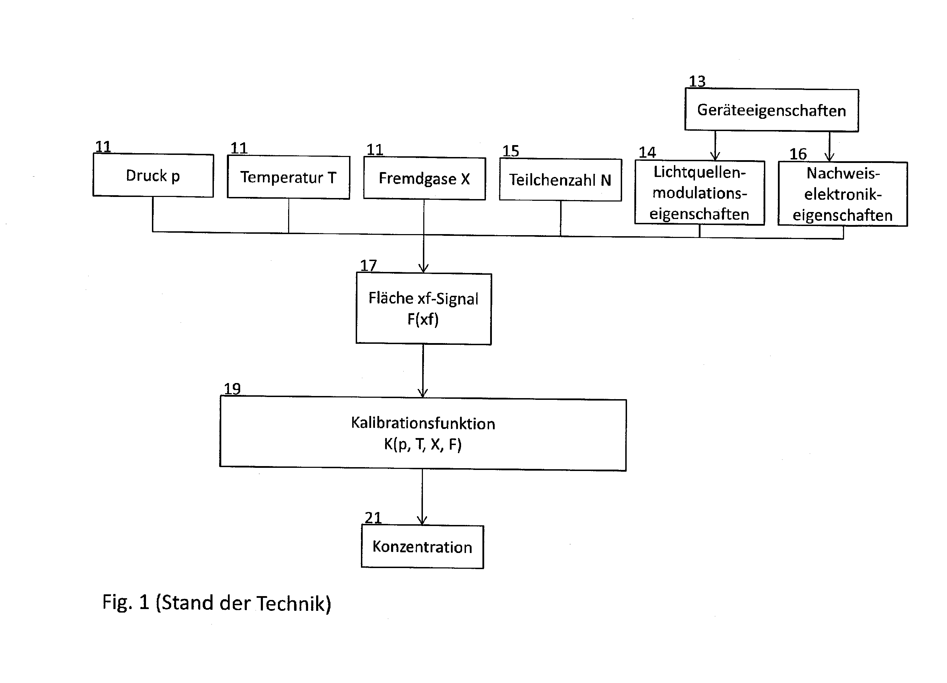

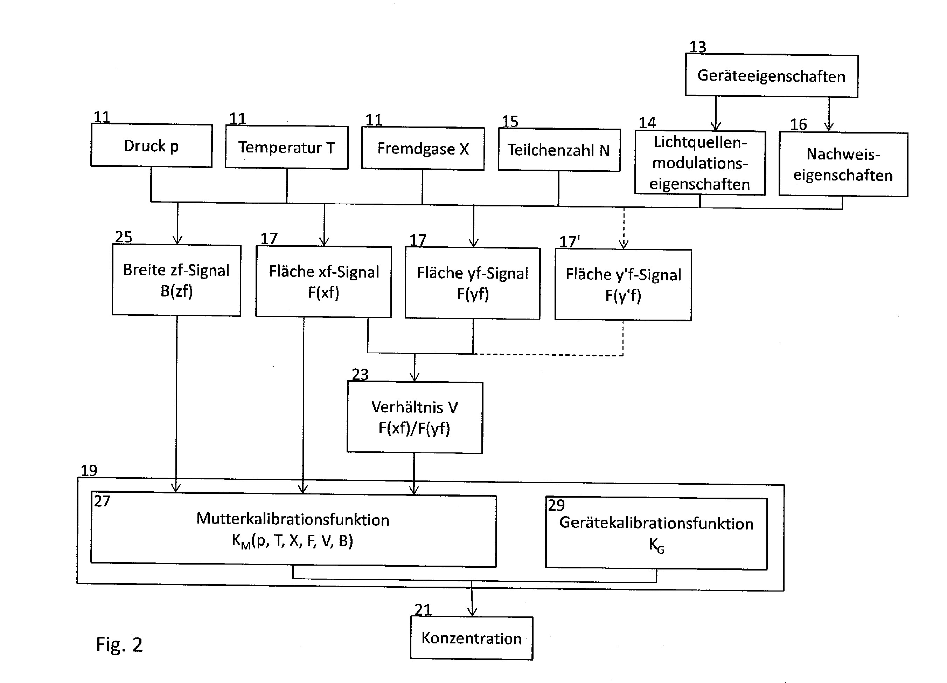

Die zur Bestimmung der Kalibrationsfunktionen 19, 27, 29 vor den Messungen (einmalig bzw. regelmäßig) durchzuführenden jeweiligen Kalibrationen sind in den Figuren nicht dargestellt. Bei den in den Fig. 1 und 2 gezeigten Messabläufen sind die jeweiligen Kalibrationsfunktionen 19, 27, 29 bereits bestimmt, d.h. sie enthalten bereits in gespeicherter Form die jeweilige Information über die funktionalen Zusammenhänge, wie sich verschiedene Einflüsse, insbesondere der Zustandsgrößen 11 des Gases und der Geräteeigenschaften 13 des Spektrometers, auf das Messergebnis 21 auswirken.

Die schematische Darstellung in Fig. 1 geht aus von Zustandsgrößen 11 einer zum messenden Probe, von Geräteeigenschaften 13 eines für die Messung verwendeten Spektrometers sowie von einer Messgröße 15, die der zu messenden Konzentration und/oder Zusammensetzung eines Gases der Probe zugrunde liegt. Bei den Zustandsgrößen 11 handelt es sich hier um den Druck p, die Temperatur T und einen Fremdgaseinfluss X. Die Geräteeigenschaften 13 des Spektrometers sind im Wesentlichen Eigenschaften der Elektronik und eines Lasers des Spektrometers und wirken sich insofern auf die Messung aus, als durch sie die Lichtquellenmodulationseigenschaften 14 des Spektrometers, also verfälschende Einflüsse auf die Wellenlängenmodulation des Spektrometers, und die Nachweiseigenschaften 16, also im Wesentlichen verfälschende Einflüsse der Elektronik des verwendeten Spektrometers, bestimmt werden. Die zur Bestimmung der Konzentration und/oder Zusammensetzung des Gases relevante Messgröße 15 der zu messenden Probe ist die Teilchenzahl N.

Die Durchführung der Messung nach Fig. 1 erfolgt durch Messen eines Absorptionssignals, das in unterschiedlicher Art und in unterschiedlichem Maße dem Einfluss der genannten Eingangsgrößen 11, 13, 15 unterliegt. Das Absorptionssignal wird bei der Wellenlängen-Modulations-Spektroskopie in der Regel nicht direkt aufgezeichnet, sondern in ein erstes Derivativsignal xf umgewandelt, aus dem eine Gaskonzentrationsmessgröße bestimmt wird. Dies beinhaltet normalerweise eine Normierung des Derivativsignals xf auf einen der empfangenen Intensität proportionalen Wert, um ein von Intensitätsschwankungen durch verschmutzte Fenster oder Staub im Strahlengang unabhängiges Derivativsignal zu erhalten. Typischerweise stellt eine Fläche F(xf) 17 des xf-Signals diese Gaskonzentrationsmessgröße dar, die sich aus dem ersten Derivativsignal xf ableiten lässt und zunächst nicht nur von der Messgröße 15, sondern auch von Einflüssen der Zustandsgrößen 11 der Probe und der Geräteeigenschaften 13 des Spektrometers abhängt. Anhand einer Kalibrationsfunktion K(p, T, X, F) 19, in die die Zustandsgrößen 11 der Probe und die Fläche 17 des xf-Signals eingehen, wird die aus den Messsignalen abgeleitete Gaskonzentrationsmessgröße von verfälschenden Einflüssen der Zustandsgrößen 11 der Probe und der Geräteeigenschaften 13 des Spektrometers befreit. Das kann beispielsweise durch Multiplikation der Gaskonzentrationsmessgrö-ße mit einem in einem solchen Fall der Kalibrationsfunktion 19 entsprechendem Korrekturfaktor erfolgen oder auf andere und komplexere Art. Das Ergebnis der Korrektur durch die Kalibrationsfunktion 19 ist letztlich die Konzentration 21 und/oder Zusammensetzung des Gases in der gemessenen Probe.

Damit die Kalibrationsfunktion 19 diese Aufgabe, verfälschende Einflüsse zu eliminieren, erfüllen kann, muss sie, beispielsweise durch die Art, in der sie definiert ist, Informationen darüber enthalten und nutzen, wie sich die Zustandsgrößen 11 und die Geräteeigenschaften 13 auf das Messsignal auswirken. Zu diesem Zweck muss die Kalibrationsfunktion 19 vor der Messung im Zuge einer Kalibration bestimmt worden sein, bei der diese Zusammenhänge durch eine Vielzahl von Kalibrationsmessungen bei verschiedenen Bedingungen und durch den Vergleich mit Referenzmessungen bestimmt werden und in die Kalibrationsfunktion 19 einfließen. Weil sich die Geräteeigenschaften 13 aber im Laufe der Zeit verändern, muss die Kalibrationsfunktion 19 für die neuen Geräteeigenschaften 13, die sich nicht einfach als Parametersatz beschreiben lassen, regelmäßig neu bestimmt werden.

Die Unterschiede des erfindungsgemäßen Verfahrens zu dem im Stand der Technik bekannten Vorgehen werden durch Vergleich der Fig. 2 mit der Fig. 1 erläutert: Bei dem in Fig. 2 dargestellten Ablauf einer Messung wird von denselben Zustandsgrößen 11 der Probe, denselben Geräteeigenschaften 13 des jeweiligen Spektrometers, die wiederum über die Lichtquellenmodulationseigenschaften 14 und die Nachweiseigenschaften 16 des Spektrometers auf das Messsignal Einfluss haben, und derselben dem zu messenden Ergebnis zugrundeliegenden Messgröße 15 der Probe ausgegangen. Diese Größen haben wiederum Einfluss auf ein gemessenes Absorptionssignal, das gemäß den Grundprinzipien der Wellenlängen-Modulations-Spektroskopie nicht direkt, sondern in Form von Derivativsignalen in die Auswertung eingeht.

Ein erstes Derivativsignal xf ist wiederum Ausgangspunkt zur Ableitung einer Gaskonzentrationsmessgröße in Form einer Fläche F(xf) 17 des xf-Signals. Bei dem in Fig. 2 beschriebenen Verfahren wird im Unterschied zu dem Verfahren nach Fig. 1 aber nicht lediglich eine Fläche F(xf) 17 des xf-Signals als Gaskonzentrationsmessgröße herangezogen. Vielmehr wird das Absorptionssignal in zumindest ein weiteres Derivativsignal yf umgewandelt. Bei dem xf-Signal kann es sich beispielsweise um das 2f-Signal und bei dem yf-Signal um das 3f-Signal handeln. Die Flächen F(xf) 17 und F(yf) 17 können dann zu einem Verhältnis V 23 verrechnet werden, das hier als einfacher Quotient F(xf)/F(yf) der beiden Flächen 17 gebildet wird. Außerdem kann auch die Bestimmung weiterer Flächen F(y'f) 17' zu weiteren Derivativsignalen y'f vorgesehen sein, die ebenfalls in das Verhältnis V 23 eingehen können (gestrichelt dargestellt). Als eine dritte Gaskonzentrationsmessgröße wird außerdem eine Breite B(zf) 25 eines Derivativsignals zf bestimmt, wobei zf zu xf oder yf identisch oder verschieden sein kann.

Bei der in Fig. 2 gezeigten Ausführungsform gehen bei einer Messung also drei Gaskonzentrationsmessgrößen 17, 23, 25 in die Kalibrationsfunktion 19 ein. Im vorliegenden Fall sind diese Gaskonzentrationsmessgrößen eine Fläche 17, ein Verhältnis 23 zweier Flächen 17 und eine Breite 25 jeweiliger Derivativsignale. Gerade durch diese Wahl solcher geeigneter Gaskon-zentrationsmessgrößen wird es vorteilhafterweise ermöglicht, dass die Lichtquellenmodulationseigenschaften 14 des Spektrometers im Zuge der anschließenden Anwendung der Kalibrationsfunktion(en) 19 kompensiert werden, so dass das Messsignal zwar natürlich weiterhin durch die Geräteeigenschaften 13 verfälscht ist, nun aber in einem ersten Schritt ohne Berücksichtigung der Nachweiseigenschaften 16 zunächst von den anderen Einflüssen (insbesondere der Zustandsgrößen 11 des Gases und den Lichtquellenmodulationseigenschaften 14) befreit werden kann.

Erfindungsgemäß ist anstelle der einzelnen Kalibrationsfunktion 19 aus Fig. 1 die Verwendung zweier Teilkalibrationsfunktionen, nämlich einer Mutterkalibrationsfunktion 27 und einer Gerätekalibrationsfunktion 29 vorgesehen, wie in Fig. 2 gezeigt. Dabei gehen während der Messung in die Mutterkalibrationsfunktion K_{M}(p, T, X, F, V, B) 27 die Zustandsgrößen 11, die Fläche 17 des xf-Signals, das Verhältnis 23 der Flächen 17, 17 des xf-und des yf-Signals sowie die Breite 25 des zf-Signals ein. Wie oben dargelegt, stellt diese Wahl der in die Mutterkalibrationsfunktion 27 eingehenden Gaskonzentrationsmessgrößen eine geeignete Möglichkeit dafür dar, dass die Lichtquellenmodulationseigenschaften 14 kompensiert werden und die Mutterkalibrationsfunktion 27 somit sozusagen entkoppelt von den Geräteeigenschaften 13 des Spektrometers ist.

Die von der Mutterkalibrationsfunktion 27 nicht berücksichtigten Nachweiseigenschaften 16 des Spektrometers werden dafür von der Gerätekalibrationsfunktion K_{G} 29 berücksichtigt. Dazu brauchen die Nachweiseigenschaften 16 während der Messung nicht als Parameter an die Gerätekalibrationsfunktion 29 übergeben zu werden, zumal sie in der Regel nicht als solche vorliegen, sondern sie sind durch die regelmäßig zu wiederholende Bestimmung der Gerätekalibrationsfunktion 29 bereits in dieser als funktionaler Zusammenhang berücksichtigt und gespeichert.

Somit eignen sich die beiden Teilkalibrationsfunktionen zur voneinander unabhängigen Beseitigung unterschiedlicher Einflüsse auf das Messsignal. Dabei sind die Teilkalibrationsfunktionen komplementär zueinander, da durch die Anwendung sowohl der Mutterkalibrationsfunktion 27 als auch der Gerätekalibrationsfunktion 29 letztlich ein der Wirkung der einzelnen Kalibrationsfunktion 19 aus Fig. 1 entsprechendes Befreien des Messsignals von verfälschenden Einflüssen sowohl der Zustandsgrößen 11 der Probe als auch der Geräteeigenschaften 13 des Spektrometers erfolgt. Beispielsweise können die Mutterkalibrationsfunktion 27 und/oder die Gerätekalibrationsfunktion 29 jeweils einen Korrekturwert ausgeben, der etwa durch Multiplikation oder eine andere Rechenoperation auf das Messsignal bzw. die eine oder die mehreren Gaskonzentrationsmessgrößen angewandt wird. Die Mutterkalibrationsfunktion 27 und/oder die Gerätekalibrationsfunktion 29 können aber auch direkt, z.B. nacheinander, auf die Gaskonzentrationsmessgrößen angewandt werden und diese so von den verfälschenden Einflüssen befreien, so dass sich schließlich die zu messende Information, d.h. die Konzentration und/oder die Zusammensetzung des Gases in der Probe, ergibt.

Auch wenn das konkrete Bestimmen der Konzentration und/oder Zusammensetzung eines Gases in einer Einzelmessung gemäß dem erfindungsgemäßen Verfahren gegenüber dem aus dem Stand der Technik bekannten Verfahren gegebenenfalls insofern aufwendiger sein kann, als durch die Berechnung der Flächen 17 der xf- bzw. yf-Signale, des Verhältnisses 23 dieser Flächen 17 sowie der Breite 25 des zf-Signals mehr Zwischenschritte erfolgen, so ist es dennoch gerade bei der regelmäßigen Durchführung von Messungen und Kalibrationen durch einen Anwender des Spektrometers sehr viel einfacher auszuführen. Die genannten zusätzlichen Berechnungen können nämlich automatisiert und mit nur wenig Rechenaufwand beispielsweise in dem Spektrometer selbst durchgeführt werden. Diesem möglichen geringfügigen Mehraufwand steht der Vorteil gegenüber, dass die vergleichsweise aufwendige Mutterkalibrationsfunktion 27 nur einmalig und in der Regel nicht von dem Anwender des Spektrometers bestimmt zu werden braucht, während die regelmäßig zu bestimmende Gerätekalibrationsfunktion 29 wesentlich einfacher, etwa mittels einer Zwei-Punkt-Kalibration, bestimmt werden kann als die einzelne Kalibrationsfunktion 19 des Stands der Technik.

Für die Zwecke des vorstehenden Textes umfasst der Begriff der "Probe" zum Beispiel ein Gas in einem abgeschlossenen Messraum aber auch ein Gas, das durch einen Messraum geleitet wird und dessen Konzentration oder Zusammensetzung bestimmt werden soll, also zum Beispiel Gas oder Rauch in einem Abgaskanal oder Schornstein.

## Patentansprüche

1. Verfahren zur Bestimmung einer Konzentration eines Gases in einer Probe und/oder der Zusammensetzung eines Gases mittels eines Spektrometers, umfassend die Schritte:
- Messen eines Absorptionssignals des Gases als Funktion der Wellenlänge, wobei die Wellenlänge einen Wellenlängenbereich im Wesentlichen kontinuierlich durchläuft und das kontinuierliche Durchlaufen des Wellenlängenbereichs durch eine vorzugsweise harmonische Wellenlängenmodulation überlagert wird, wobei der Einfluss der Wellenlängenmodulation auf das Absorptionssignal über die Lichtquellenmodulationseigenschaften und die Nachweiseigenschaften des Spektrometers von den Geräteeigenschaften des jeweiligen Spektrometers abhängig ist;
- Umwandeln des Absorptionssignals zumindest in ein erstes Derivativsignal;
- Ableiten einer Gaskonzentrationsmessgröße aus dem ersten Derivativsignal;
- Bestimmen der Konzentration und/oder Zusammensetzung des Gases aus zumindest der Gaskonzentrationsmessgröße und einer Kalibrationsfunktion, durch welche Einflüsse von Zustandsgrößen des Gases und der Geräteeigenschaften des jeweiligen Spektrometers kompensiert werden;
**dadurch gekennzeichnet, dass** die Kalibrationsfunktion eine Mutterkalibrationsfunktion und eine Gerätekalibrationsfunktion umfasst, wobei in die Mutterkalibrationsfunktion die Zustandsgrößen des Gases und eine oder mehrere von jeweiligen Derivativsignalen abgeleitete Gaskonzentrationsmessgrößen eingehen, die so gewählt sind, dass die Lichtquellenmodulationseigenschaften des Spektrometers im Wesentlichen kompensiert werden, und wobei die Gerätekalibrationsfunktion die Nachweiseigenschaften des jeweiligen Spektrometers berücksichtigt.

2. Verfahren nach Anspruch 1,
**dadurch gekennzeichnet, dass** das Umwandeln des Absorptionssignals zumindest in ein erstes Derivativsignal umfasst, dass das Derivativsignal auf eine der Lichtintensität proportionale Größe normiert wird.

3. Verfahren nach Anspruch 1 oder 2,
**dadurch gekennzeichnet, dass** die Zustandsgrößen des Gases einen Druck, eine Temperatur der Probe und/oder einen Fremdgaseinfluss umfassen.

4. Verfahren nach Anspruch 3,
**dadurch gekennzeichnet, dass** der Fremdgaseinfluss nicht als Zustandsgröße vorliegen muss.

5. Verfahren nach einem der vorhergehenden Ansprüche,
**dadurch gekennzeichnet, dass** die Lichtquellenmodulationseigenschaften des jeweiligen Spektrometers Eigenschaften einer Lichtquelle des Spektrometers sind und/oder die Nachweiseigenschaften des jeweiligen Spektrometers Eigenschaften der Elektronik des Spektrometers sind.

6. Verfahren nach einem der vorhergehenden Ansprüche,
**dadurch gekennzeichnet, dass** die Gerätekalibrationsfunktion durch eine Zwei-Punkt-Kalibration bestimmt wird.

7. Verfahren nach Anspruch 6,
**dadurch gekennzeichnet, dass** die Zwei-Punkt-Kalibration eine Messung des Gases oder eines Referenzgases bei einer ersten und bei einer zweiten Gaskonzentration umfasst, vorzugsweise eine Messung des Gases oder eines Referenzgases bei etwa 0% und bei etwa 70% einer maximalen zuverlässig messbaren Konzentration dieses Gases.

8. Verfahren nach einem der vorhergehenden Ansprüche,
**dadurch gekennzeichnet , dass** als Gaskonzentrationsmessgröße in die Mutterkalibrationsfunktion zumindest eine Fläche des ersten Derivativsignals oder eine zu der Fläche des ersten Derivativsignals proportionale Größe eingeht.

9. Verfahren nach einem der vorhergehenden Ansprüche,
**dadurch gekennzeichnet , dass** das Verfahren ferner das Umwandeln des Absorptionssignals in ein zweites Derivativsignal umfasst und als Gaskonzentrationsmessgröße in die Mutterkalibrationsfunktion zumindest ein Verhältnis einer Fläche des ersten Derivativsignals und einer Fläche des zweiten Derivativsignals eingeht.

10. Verfahren nach einem der Ansprüche 8 oder 9,
**dadurch gekennzeichnet , dass** die Fläche des ersten Derivativsignals und/oder eine Fläche eines zweiten Derivativsignals aus dem Abstand eines Maximums des jeweiligen Derivativsignals zu einem Minimum des jeweiligen Derivativsignals oder aus zwischen der x-Achse und dem jeweiligen Derivativsignal eingeschlossenen Flächen abgeleitet wird/werden.

11. Verfahren nach einem der vorhergehenden Ansprüche,
**dadurch gekennzeichnet , dass** als Gaskonzentrationsmessgröße in die Mutterkalibrationsfunktion zumindest eine Breite des ersten Derivativsignals eingeht, vorzugsweise eine Halbwertsbreite eines Extremums des ersten Derivativsignals oder ein Abstand zwischen zwei Extrema des ersten Derivativsignals, zwischen zwei Nulldurchgängen des ersten Derivativsignals oder zwischen einem Extremum und einem Nulldurchgang des ersten Derivativsignals.

12. Verfahren nach einem der vorhergehenden Ansprüche,
**dadurch gekennzeichnet , dass** die Mutterkalibrationsfunktion durch eine Vielzahl von Messungen bei Vorliegen verschiedener Kombinationen von Zustandsgrößen einer jeweiligen Probe bestimmt wird.

13. Spektrometer zur Ausführung eines Verfahrens nach einem der vorhergehenden Ansprüche.

14. Spektrometer nach Anspruch 13,
**dadurch gekennzeichnet , dass** das Spektrometer einen Laser, vorzugsweise einen Diodenlaser, umfasst und das Absorptionssignal aus der Absorption von Licht dieses Lasers durch das Gas resultiert.

15. Spektrometer nach einem der Ansprüche 13 oder 14,
**dadurch gekennzeichnet , dass** die Mutterkalibrationsfunktion im Wesentlichen dauerhaft in dem Spektrometer gespeichert ist.
